(19) Europäisches Patentamt / European Patent Office / Office européen des brevets

(11) **EP 3 578 594 A1**

(12) **EUROPEAN PATENT APPLICATION**
published in accordance with Art. 153(4) EPC

(43) Date of publication:
**11.12.2019 Bulletin 2019/50**

(51) Int Cl.:
**C08J 5/18** (2006.01)     **B32B 27/36** (2006.01)
**C08K 3/00** (2018.01)     **C08L 67/02** (2006.01)

(21) Application number: **17895460.8**

(22) Date of filing: **20.09.2017**

(86) International application number:
**PCT/JP2017/033850**

(87) International publication number:
**WO 2018/142662 (09.08.2018 Gazette 2018/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.01.2017 JP 2017015166**

(71) Applicant: **Toray Industries, Inc.**
**Tokyo 103-8666 (JP)**

(72) Inventors:
• **YOSHIDA, Shohei**
  **Otsu-shi**
  **Shiga 520-8558 (JP)**
• **AOYAMA, Shigeru**
  **Otsu-shi**
  **Shiga 520-8558 (JP)**

(74) Representative: **Kador & Partner PartG mbB**
**Corneliusstraße 15**
**80469 München (DE)**

(54) **ORIENTED POLYESTER FILM**

(57) An oriented polyester film having excellent electrical insulating properties and thermal conductivity is provided as an oriented polyester film having a layer (P1 layer) containing a polyester and a filler, wherein the P1 layer satisfies the following (1) and (2): (1) the filler content of the P1 layer is 10 to 60 mass% with respect to the whole P1 layer; and (2) the polyester contained in the P1 layer contains, as a main component, a polyester having an aromatic dicarboxylic acid component and a diol component as main constituents; wherein the diol component contains both a diol (A) whose main-chain has an even number of carbon atoms and a diol (B) whose main-chain has an odd number of carbon atoms; and wherein a molar ratio (A)/(B) of the diol (A) to the diol (B) is 30/70 to 97/3.

[Fig. 2]

## Description

TECHNICAL FIELD

The present invention relates to an oriented polyester film.

BACKGROUND ART

Polyester resins (in particular, poly(ethylene terephthalate), poly(ethylene-2,6-naphthalenedicarboxylate), etc.) are excellent in mechanical properties, thermal properties, chemical resistance, electrical properties, and formability and therefore used in various applications.] The polyesters are stretched/oriented into films to form oriented polyester films, and biaxially oriented polyester films in particular have excellent mechanical properties, electrical properties, etc., and accordingly used in various industrial materials such as copper clad laminated boards, solar-cell back sheets, adhesive tapes, flexible printed boards, membrane switches, planar heating elements, flat cables, electrical insulation members for rotary electric machines, magnetic recording materials, capacitor materials, packaging materials, automobile materials, building materials, photographing materials, graphics materials, thermal ink-transfer printing materials, and electric cell materials.

Among these applications, electrical insulation members for rotary electric machines (for example, insulating materials for wind power generators, insulating materials for hybrid motors, insulating materials for air-conditioner motors, and insulating materials for servomotors) and the like are associated with the development of rotary electric machines that are smaller in size and have a higher output, and along with this development, heat generation during power generation and machine usage has risen to the surface. There is a problem in that an increase in temperature caused by heat generated and accumulated decreases power generation efficiency and increases power consumption. For these reasons, it has been important to transfer and dissipate the heat generated inside to outside. In addition, electrical insulating materials for use in electronic components (such as adhesive tapes, flexible printed boards, and membrane switches) have problems like the following one: along with the recent trend of electronic components toward high performance, smaller sizes, and enhanced integration, the amount of heat generated from various electronic components has become greater and consequently been causing a decrease in processing speed and an increase in power consumption. For this reason, it has been important to release the heat generated inside to outside through an exterior casing such as a cabinet. In addition, insulating materials used for lithium ion batteries and the like are associated with increasing battery output, which makes countermeasures to heat generation more important.

Under these circumstances, films having excellent thermal conductivity are demanded and various materials have been proposed. For example, a composite film produced by using a graphite sheet, which has excellent thermal conductivity, and then laminating a PET film as a protective layer to one side or both sides of the graphite sheet (Patent Document 1) and a film composed of a biaxially stretched PET film containing fibrous carbon material (Patent Documents 2 and 3) are proposed.

Citation List

Patent Documents

Patent Document 1: JP 2008-80672 A
Patent Document 2: JP 2013-28753 A
Patent Document 3: JP 2013-38179 A

SUMMARY OF INVENTION

Technical Problem

However, the technique of Patent Document 1 has such problems that the graphite sheet is brittle and poor in mechanical properties, the thermal conductivity of the PET film as the protective layer is low and not enough for allowing the graphite sheet to fully perform its excellent thermal conductivity, and lamination makes the composite film thicker. The techniques of Patent Documents 2 and 3 also have problems that fibrous carbon materials are highly conductive and therefore not suitable for applications where insulation is required.

In addition, a general approach to enhancing the thermal conductivity of a resin is an approach in which a high concentration of filler having high heat transfer properties is added to a resin, but there is a problem in that an oriented film produced by orienting, by stretching or the like, the resin to which a high concentration of filler has been added causes interfacial peeling to occur and thus form voids in the interface between the filler and the resin in an orientation process, that the voids act as a thermal insulation layer, and accordingly that the obtained film results in having low thermal conductivity.

In view of this, an object of the present invention is to provide an oriented polyester film having excellent electrical insulating properties and thermal conductivity.

Solution to Problem

To solve the above-mentioned problems, the present invention subsumes the following constituents. That is,

[I] an oriented polyester film, including a layer (P1 layer) containing a polyester and a filler, wherein the P1 layer satisfies the following (1) and (2):

(1) the filler content of the P1 layer is 10 to 60 mass% with respect to the whole P1 layer; and
(2) the polyester contained the P1 layer contains, as a main component, a polyester having an aromatic dicarboxylic acid component and a diol component as main constituents;
wherein the diol component contains both a diol (A) whose main-chain has an even number of carbon atoms and a diol (B) whose main-chain has an odd number of carbon atoms; and
wherein a molar ratio (A)/(B) of the diol (A) to the diol (B) is 30/70 to 97/3.

[II] The oriented polyester film according to [I], wherein the diol (B) whose main-chain has an odd number of carbon atoms is 1,3-propanediol.
[III] The oriented polyester film according to [I] or [II], wherein the diol (A) whose main-chain has an even number of carbon atoms is 1,2-ethanediol.
[IV] The oriented polyester film according to any one of [I] to [III], having a thermal diffusivity in the thickness direction is $1.6 \times 10^{-7}$ m$^2$/s or more.
[V] The oriented polyester film according to any one of [I] to [IV], wherein the polyester of the P1 layer has an intrinsic viscosity (IV) of 0.65 or more.
[VI] The oriented polyester film according to any one of [I] to [V], having a breakdown voltage of 60 kV/mm or more.
[VII] The oriented polyester film according to any one of [I] to [VI], having a surface specific resistance of $1.0 \times 10^{13}$ Ω/□ or more.
[VIII] The oriented polyester film according to any one of [I] to [VII], wherein at least one surface of the film satisfies $0 \leq \text{Vfa} / \text{Vfb} < 1$,
wherein, assuming that the thickness of the film is T (μm),
Vfa (vol%) is the filler content in a region from the one surface of the film to the thickness position 0.1T, and
Vfb (vol%) is the filler content in a region from the thickness position 0.1T to the thickness position 0.9T relative to the one surface of the film.
[IX] The oriented polyester film according to [VIII], wherein both surfaces satisfy $0 \leq \text{Vfa} / \text{Vfb} < 1$.
[X] The oriented polyester film according to any one of [I] to [IX], wherein at least one surface of the film satisfies $0 \leq \text{Ma} / \text{Mb} < 1$,
wherein, assuming that the thickness of the film is T (μm),
Ma (mol%) is a ratio of the diol (B) whose main-chain has an odd number of carbon atoms to the diol components contained in the polyester in the region from one surface of the film to the thickness position 0.1T, and
Mb (mol%) is a ratio of the diol (B) whose main-chain has an odd number of carbon atoms to the diol components contained in the polyester in the region from the thickness position 0.1T to the thickness position 0.9T relative to the one surface of the film.
[XI] The oriented polyester film according to [X], wherein both surfaces satisfy $0 \leq \text{Ma} / \text{Mb} < 1$.

Advantageous Effects of Invention

The present invention can provide a polyester film that is excellent in electrical insulating properties, thermal conductivity, and mechanical properties, compared to conventional oriented polyester films. Such an oriented polyester film can be suitably used in applications where electrical insulating properties and thermal conductivity are considered important, namely, applications including electrical insulating materials such as copper clad laminated boards, solar-cell back sheets, adhesive tape, flexible printed boards, membrane switches, planar heating elements, flat cables, insulation members for rotary electric machines, magnetic recording materials, capacitor materials, automobile materials, thermal ink-transfer printing materials, and electric cell materials. More specifically, such an oriented polyester film can be used to provide rotary electric machines, batteries, electronic equipment, and the like which have high energy efficiency.

BRIEF DESCRIPTION OF DRAWINGS

Fig. 1 is a schematic diagram depicting an overview of an evaluation module for evaluating the heat radiation as insulating material.
Fig. 2 is a schematic diagram depicting the thickness regions of a cross-section of the oriented polyester film.

DESCRIPTION OF EMBODIMENTS

The oriented polyester film according to the present invention needs to have a layer (P1 layer) containing a polyester and a filler. In this regard, an oriented polyester film in the present invention refers to a film formed by orienting, at least in a uniaxial direction, a resin composition for forming the film, wherein the resin composition has a resin containing a polyester as a main component. Orientation at least in a uniaxial direction means that an orientation parameter is 1.2 or more in a direction, as determined by orientation measurement carried out by Raman spectroscopy in the film thickness direction.

In the present invention, a polyester refers to a resin having an ester bond as the main bond. For the oriented polyester film according to the present invention, it is necessary that the P1 layer contains, as the main component, a polyester having an aromatic dicarboxylic component and a diol component as the main constituents. Herein, a constituent refers to the smallest unit obtainable by hydrolysis of a polyester. In addition, a main constituent, as mentioned herein, means that a ratio of the constituent to all the constituents is 80 mol% or more, more preferably 90 mol% or more, still more preferably 95 mol% or more. In addition, a main component, as mentioned herein, means that a ratio of the component to all the components is 80 mass% or more, more preferably 90 mass% or more, still more preferably 95 mass% or more.

Non-limiting examples of the dicarboxylic acid constituent of the polyester include aliphatic dicarboxylic acids such as malonic acid, succinic acid, glutaric acid, adipic acid, suberic acid, sebacic acid, dodecanedioic acid, dimer acids, eicosanedioic acid, pimelic acid, azelaic acid, methylmalonic acid, and ethylmalonic acid, alicyclic dicarboxylic acids such as adamantane dicarboxylic acid, norbornene dicarboxylic acid, isosorbide, cyclohexane dicarboxylic acid, and decalindicarboxylic acid, aromatic dicarboxylic acids such as terephthalic acid, isophthalic acid, phthalic acid, 1,4-naphthalene dicarboxylic acid, 1,5-naphthalene dicarboxylic acid, 2,6-naphthalene dicarboxylic acid, 1,8-naphthalene dicarboxylic acid, 4,4'-diphenyldicarboxylic acid, 4,4'-diphenyl ether dicarboxylic acid, 5-sodium sulfoisophthalic acid, phenylindane dicarboxylic acid, anthracene dicarboxylic acid, phenanthrene dicarboxylic acid, and 9,9'-bis(4-carboxyphenyl)fluorene acid, and ester derivatives thereof. Also preferable are, for example, these dicarboxylic acid constituents having a terminal carboxyl group to which oxyacids such as 1-lactide, d-lactide, and hydroxybenzoic acid, derivatives thereof, or several oxyacids linked to each other are added. In addition, one of these carboxylic acid constituents may be used alone, or a plurality of these carboxylic acid constituents may be used together as needed.

In the oriented polyester film according to the present invention, a ratio of an aromatic dicarboxylic acid constituent to all the dicarboxylic acid constituents contained in the polyester in the P1 layer is preferably 90 mol% or more and 100 mol% or less. The ratio is more preferably 95 mol% or more or 100 mol%. The ratio is further preferably 98 mol% or more and 100 mol% or less, particularly preferably 99 mol% or more and 100 mol% or less. Most preferably, the ratio is 100 mol%, that is, the dicarboxylic acid constituent is exclusively an aromatic carboxylic acid constituent. In some cases, a ratio of lower than 90 mol% decreases the heat resistance. An oriented polyester film having high heat resistance can be obtained in the below-mentioned production method by allowing the ratio of an aromatic dicarboxylic acid constituent to all the dicarboxylic acid constituents contained in the polyester in the P1 layer to be 90 mol% or more and 100 mol% or less in the oriented polyester film according to the present invention.

In addition, preferable as diol constituents contained in such a polyester are aliphatic diols such as 1,2-ethanediol, 1,2-propanediol, 1,3-propanediol, 1,2-butanediol, 1,3-butanediol, 1,4-butanediol, 1,2-pentanediol, 1,3-pentanediol, 1,4-pentanediol, and 1,5-pentanediol. One of these diol constituents may be used singly, or a plurality of these diol constituents may be used together, if necessary.

For the oriented polyester film according to the present invention, it is necessary that the diol component contained in the polyester in the P1 layer contains both a diol (A) whose main-chain has an even number of carbon atoms and a diol (B) whose main-chain has an odd number of carbon atoms.

The diol (A) whose main-chain has an even number of carbon atoms refers to a diol having a chain of carbon atoms between two carbon atoms to each of which a hydroxy group is bonded, wherein the count of the carbon atoms is an even number, including the carbon atoms to each of which a hydroxy group is bonded. Examples of the diol (A) whose main-chain has an even number of carbon atoms include 1,2-ethanediol, 1,2-propanediol, 1,2-butanediol, 1,4-butanediol, 1,2-pentanediol, 1,4-pentanediol, and 1, 4-cyclohexanedimethanol. From a film-forming properties viewpoint, linear diols having no side chain nor cyclic skeleton, such as 1,2-ethanediol and 1,4-butanediol are preferable, and 1,2-ethanediol is more preferable.

The diol (B) whose main-chain has an odd number of carbon atoms refers to a diol having a chain of carbon atoms between two carbon atoms to each of which a hydroxy group is bonded, wherein the count of the carbon atoms is an odd number, including the carbon atoms to each of which a hydroxy group is bonded. Examples of the diol (B) whose main-chain has an odd number of carbon atoms include 1,3-propanediol, 1,3-butanediol, 1,3-pentanediol, and 1,5-pentanediol. From a film-forming properties viewpoint, linear diols having no side chain nor cyclic skeleton, such as 1,3-propanediol and 1,5-pentanediol are preferable, and 1,3-propanediol is more preferable.

The oriented polyester film according to the present invention contains both the diol (A) and diol (B) in the P1 layer, thus enables the orientational behavior of the molecular chain to change during stretching, and can inhibit voids from being formed at the interface between the filler and the resin owing to excessive orientation of the molecular chain. Accordingly, the film results in having excellent thermal conductivity.

In addition, a molar ratio (A)/(B) of the diol (A) to the diol (B) needs to be 30/70 or more and 97/3 or less. A molar ratio (A)/(B) of more than 97/3 or less than 30/70 does not make it possible to obtain the effects which the present invention has and by which allowing the diol (A) and diol (B) to coexist enables the orientational behavior of the molecular chain to change during stretching and inhibits voids from being formed. In addition, a molar ratio of less than 30/70 may impair the heat resistance as insulating material. The molar ratio (A)/(B) is preferably 40/60 or more and 90/10 or less, more preferably 50/50 or more and 80/20 or less.

Although the polyester in the P1 layer can be obtained by appropriately combining the above-described constituents (a dicarboxylic acid and a diol) and subjecting these constituents to polycondensation, it is also preferable that the polyester is obtained by copolymerizing these constituents with an additional constituent having three or more carboxyl groups and/or hydroxyl groups. In the latter case, the ratio of the additional constituent having three or more carboxyl groups and/or hydroxyl groups to all the constituents of the polyester subjected to copolymerization is preferably 0.005 mol% or more and 2.5 mol% or less.

In the oriented polyester film according to the present invention, the polyester contained in the layer (P1 layer) containing the polyester and a filler has an intrinsic viscosity (IV) of preferably 0.65 or more. The intrinsic viscosity is more preferably 0.70 or more, still more preferably 0.75 or more. An IV value of less than 0.65 causes entanglement to be excessively less among the molecular chains of the polyester containing the below-mentioned filler, accordingly decreases the mechanical properties, decreases the filler dispersibility, and accordingly decreases the thermal conductivity. Although the upper limit of the IV value is not limited to a particular one, a higher IV value may lead to a longer polymerization time, which is disadvantageous in terms of cost, or may lead to difficult melt-extrusion, and from this viewpoint, the value is preferably 1.4 or less, more preferably 1.2 or less.

To achieve the above-mentioned IV values, the following methods can be employed: a method in which a polyester is used which is obtained by discharging the materials when the materials have achieved a predetermined melt viscosity through melt-polymerization and by forming the materials into chips; a method in which a polyester is used which is obtained by once forming the materials into chips when the materials have achieved an IV value lower than a target value, and then by allowing the chips to undergo solid-phase polymerization. Of these methods, it is preferable to use the method in which a polyester is used which is obtained by once forming the materials into chips when the materials have achieved an IV value lower than a target value, and then by allowing the chips to undergo solid-phase polymerization, particularly because this method can decrease thermal degradation and also reduce the number of terminal carboxyl groups. In addition, for further enhancing the IV value of the film, it is preferable to perform the below-mentioned method in which a polyester is allowed to contain a filler and then undergo solid-phase polymerization.

In the oriented polyester film according to the present invention, the P1 layer needs to contain a filler. Examples of fillers in the present invention include: metals such as gold, silver, copper, platinum, palladium, rhenium, vanadium, osmium, cobalt, iron, zinc, ruthenium, praseodymium, chromium, nickel, aluminum, tin, titanium, tantalum, zirconium, antimony, indium, yttrium, lanthanum, and silicon; metal oxides such as zinc oxide, titanium oxide, cesium oxide, antimony oxide, tin oxide, indium tin oxide, yttrium oxide, lanthanum oxide, zirconium oxide, aluminum oxide, magnesium oxide, and silicon oxide; metal fluorides such as lithium fluoride, magnesium fluoride, aluminum fluoride, and cryolite; metal phosphates such as calcium phosphate; carbonates such as calcium carbonate; sulfates such as barium sulfate and magnesium sulfate; nitrides such as silicon nitride, boron nitride, and carbon nitride; silicates such as wollastonite, sepiolite, xonotlite, and aluminosilicate; titanates such as potassium titanate and strontium titanate; and carbon compounds such as carbon, fullerene, carbon fiber, carbon nanotube, and silicon carbide. These fillers may be used singly or in mixture of two or more kinds thereof. In addition, these fillers for use may be those surface-reformed by surface treatment such as silane coupling agent treatment, metal vapor deposition, polymer grafting, and plasma treatment for the purposes of enhancing affinity with resin and enhancing dispersibility.

Preferable examples of filler materials for use in the oriented polyester film according to the present invention include materials having no electrical conductivity, such as metal oxides such as zinc oxide, titanium oxide, cesium oxide, antimony oxide, tin oxide, indium tin oxide, yttrium oxide, lanthanum oxide, zirconium oxide, aluminum oxide, magnesium oxide, and silicon oxide; metal fluorides such as lithium fluoride, magnesium fluoride, aluminum fluoride, and cryolite; metal phosphates such as calcium phosphate; carbonates such as calcium carbonate; sulfates such as barium sulfate and magnesium sulfate; nitrides such as silicon nitride, boron nitride, and carbon nitride; silicates such as wollastonite, sepiolite, xonotlite, and aluminosilicate; and titanates such as potassium titanate. The reason for this is that the fillers have insulating properties and thus can remarkably achieve the effects which the present invention has and which allow electrical insulating properties to be maintained for a long time, and accordingly that the fillers are particularly preferred in applications in which electrical insulating properties are required.

In the oriented polyester film according to the present invention, the filler content of the P1 layer (Vf1 (vol%)) needs to be 10 mass% or more, 60 mass% or less. The content is preferably 15 mass% or more and 50 mass% or less, more preferably 20 mass% or more and 40 mass% or less. A filler content of less than 10 mass% fails to allow the filler to form a heat transfer path, and may deteriorate the thermal conductivity. A filler content of more than 60 mass% may deteriorate the film-forming properties of the film and decrease the handling ability and insulating properties needed when the film is used as an insulating material.

In the oriented polyester film according to the present invention, the average diameter of a filler contained in the P1 layer is preferably 1.1 $\mu$m or more and 40.0 $\mu$m or less, more preferably 3 $\mu$m or more and 35.0 $\mu$m or less, still more preferably 5 $\mu$m or more and 30.0 $\mu$m or less. An average diameter of less than 1.1 $\mu$m causes the interfacial area to be excessively large, thus impedes contact among fillers, and decreases the thermal conductivity. On the other hand, an average diameter of more than 40.0 $\mu$m decreases the film-forming properties for the film and deteriorates the handling ability and insulating properties of the film after film-forming.

The oriented polyester film according to the present invention is preferably used whether the film is composed only of the layer (P1 layer) containing a polyester and a filler, or used as a laminate structure including another layer. When the film is used as a laminate structure and when the high thermal conductivity and high heat resistance of the P1 layer need to be exhibited, a ratio of the P1 layer to the whole oriented polyester film is preferably 50 vol% or more. The ratio is more preferably 60 vol% or more, still more preferably 70 vol% or more.

The thickness of the oriented polyester film of the present invention as a whole is preferably 5 $\mu$m or more and 500 $\mu$m or less, more preferably 10 $\mu$m or more and 400 $\mu$m or less. The thickness is still more preferably 20 $\mu$m or more and 300 $\mu$m or less. In cases where the thickness is less than 5 $\mu$m, the film-forming properties of the film are poorer, and film-formation may be difficult to perform. On the other hand, in cases where the thickness is larger than 500 $\mu$m, the handling ability is deteriorated when the film is processed, for example, cut or folded, as an insulating material. In cases where the thickness of the whole of the oriented polyester film according to the present invention is 5 $\mu$m or more and 500 $\mu$m or less, the film-forming properties and handling ability can be both obtained.

The oriented polyester film according to the present invention preferably has a thermal diffusivity in the thickness direction of the film of $1.6 \times 10^{-7}$ m$^2$/s or more. The thermal diffusivity is more preferably $1.7 \times 10^{-7}$ m$^2$/s or more, still more preferably $1.8 \times 10^{-7}$ m$^2$/s or more, particularly preferably $2.0 \times 10^{-7}$ m$^2$/s or more. Satisfying these values enables the oriented polyester film to be suitably used in applications where thermal conductivity is considered important, namely, applications including electrical insulating materials such as copper clad laminated boards, solar-cell back sheets, adhesive tape, flexible printed boards, membrane switches, planar heating elements, flat cables, materials for rotary electric machines, magnetic recording materials, capacitor materials, automobile materials, building materials, thermal ink-transfer printing materials, and electric cell materials. Examples of methods of increasing the thermal diffusivity in the thickness direction of the film include: adopting the preferable formulation of raw materials described above; a method in which a polyester and a filler are mixed to obtain a chip-like composition, the obtained chips are allowed to undergo solid-phase polymerization and to have an increased intrinsic viscosity, and then a film is formed; and a method in which a stretch factor applied in film-forming is such as the below-mentioned more preferable factor. In this regard, the upper limit of the thermal diffusivity is not limited to a particular value, but it is practically difficult to obtain an oriented polyester film having a thermal diffusivity of more than $2.0 \times 10^{-6}$ m$^2$/s.

The oriented polyester film according to the present invention preferably has a breakdown voltage of 60 kV/mm or more. In some cases, a breakdown voltage of less than 60 kV/mm causes the electrical strength during actual use to deteriorate and impairs the reliability of equipment. The breakdown voltage is more preferably 70 kV/mm or more, still more preferably 80 kV/mm or more, further 90 kV/mm, particularly preferably 100 kV/mm or more, further particularly preferably 110 kV/mm or more. Examples of methods of obtaining a breakdown voltage within the above-mentioned range include: controlling the type, filler diameter, and addition amount of the filler contained in the layer (P1 layer) containing a polyester and a filler; and the like.

The oriented polyester film according to the present invention preferably has a surface specific resistance of $1.0 \times 10^{13}$ $\Omega/\square$ or more. Satisfying these values enables the oriented polyester film to be suitably used in applications where insulating properties is considered important, namely, applications including electrical insulating materials such as copper clad laminated boards, solar-cell back sheets, adhesive tape, flexible printed boards, membrane switches, planar heating elements, flat cables, materials for rotary electric machines, magnetic recording materials, capacitor materials, automobile materials, building materials, thermal ink-transfer printing materials, and electric cell materials. In order that the value is satisfied, a filler to be added preferably has no electrical conductivity. In this regard, the upper limit of the surface specific resistance is not limited to a particular value, but it is practically difficult to obtain an oriented polyester film having a surface specific resistance of more than $1.0 \times 10^{16}$ $\Omega/\square$.

In the oriented polyester film according to the present invention, at least one surface of the film preferably allows Vfa / Vfb to satisfy $0 \leq$ Vfa / Vfb < 1, wherein, assuming that the thickness of the film is T ($\mu$m), Vfa (vol%) is the filler content in a region from the one surface of the film to the thickness position 0.1T, and Vfb (vol%) is the filler content in a region from the thickness position 0.1T to the thickness position 0.9T relative to the one surface of the film. More preferably, both surfaces allow Vfa / Vfb to satisfy $0 \leq$ Vfa / Vfb < 1. In the present invention, Vfa / Vfb is determined by the below-mentioned method, which indicates that the smaller a Vfa / Vfb value is, the smaller the filler content of the surface layer of the film is. This results in making it possible to inhibit the filler from sliding off from the film surface, and inhibit interfacial peeling from occurring at the interface between the filler and the resin. Such a value allows a remarkable effect to be exhibited particularly in applications which require the film to be adhered to a smooth face, and is preferable because the less likely it is that the slide of the filler and the interfacial peeling at the interface between a filler and a resin occur, the higher the adhesion to the smooth face is. The value is more preferably $0.1 \leq$ Vfa / Vfb $\leq 0.8$, still more preferably $0.1 \leq$ Vfa / Vfb $\leq 0.7$. A Vfa / Vfb value of 1 or more causes many filler particles to exist on the film surface, causing the filler to slide off from the film surface, and in some cases, causing contamination of manufacturing process and interfacial peeling at the interface between a filler and a resin. In this regard, the lower limit of Vfa / Vfb is 0, and the value is more preferably 0.1 or more from the viewpoint of enhancing the thermal conductivity of the film. In order to achieve $0 \leq$ Vfa / Vfb < 1, it is preferable that the type and surface activity of the filler are controlled, and in addition, a layer containing a smaller amount of filler and a layer containing a larger amount of filler are laminated and formed into a laminate structure at least one surface of which has a layer having a less filler content.

In the oriented polyester film according to the present invention, at least one surface of the film preferably allows Ma / Mb to satisfy $0 \leq$ Ma / Mb < 1, wherein, assuming that the thickness of the film is T ($\mu$m), Ma (mol%) is a ratio of the diol (B) whose main-chain has an odd number of carbon atoms to the diol components contained in the polyester in the region from one surface of the film to the thickness position 0.1T, and Mb (mol%) is a ratio of the diol (B) whose main-chain has an odd number of carbon atoms to the diol components contained in the polyester in the region from the thickness position 0.1T to the thickness position 0.9T relative to the one surface of the film. More preferably, both surfaces allow Ma / Mb to satisfy $0 \leq$ Ma / Mb < 1.

In the present invention, Ma / Mb is determined by the below-mentioned method, which indicates that the smaller an Ma / Mb value is, the smaller the amount of a polyester containing, as a constituent, the diol (B) whose main-chain has an odd number of carbon atoms is in the surface layer of the film. This results in making possible to inhibit the orientation of the film from decreasing and thus inhibit the mechanical strength and heat resistance from decreasing, and to inhibit a volatile component such as an oligomer from precipitating onto the film surface and thus inhibit contamination of manufacturing process from occurring. The value is more preferably $0.1 \leq$ Ma / Mb $\leq 0.8$, still more preferably $0.1 \leq$ Ma / Mb $\leq 0.7$. An Ma / Mb value of 1 or more causes a larger amount of polyester containing, as a constituent, the diol (B) whose main-chain has an odd number of carbon atoms to exist in the surface layer of the film, and in some cases, the orientation of the film decreases, causing the mechanical strength and heat resistance to decrease, and a volatile component such as an oligomer precipitates onto the film surface, causing contamination of manufacturing process. In order to achieve $0 \leq$ Ma / Mb < 1, it is preferable that a layer containing a smaller amount of polyester containing, as a constituent, the diol (B) whose main-chain has an odd number of carbon atoms and a layer containing a larger amount of the polyester are laminated and formed into a laminate structure at least one surface of which has a layer containing a smaller amount of polyester containing, as a constituent, the diol (B) whose main-chain has an odd number of carbon atoms.

The oriented polyester film according to the present invention may be a monolayer film composed of the P1 layer alone, or a laminate structure having the P1 layer and an additional layer (hereinafter, the additional layer may be referred to as the P2 layer for short) on at least one side of the P1 layer. Of these, a laminate structure in which the P2 layer containing a smaller amount of filler than the P1 layer is laminated on at least one side of the P1 layer is preferable with a view to inhibiting the filler from sliding off from the film surface, and to inhibiting interfacial peeling from occurring at the interface between the filler and the resin. More preferable is a laminate structure in which the P2 layer having a smaller particle content than the P1 layer is laminated on both sides of the P1 layer. In this case, it is preferable from a film-forming properties viewpoint that the main component of a resin contained in the P2 layer is a polyester resin.

In addition, a filler is preferably added to the P2 layer in order to enhance the thermal conductivity, and examples of fillers to be used are as above-mentioned. In this case, the filler content of the P2 layer, Vf2 (vol%), preferably satisfies $0 \leq$ Vf2 / Vf1 < 1 with respect to the filler content of the P1 layer, Vf1 (vol%), in order that the film satisfies the above-mentioned relationship $0 \leq$ Vfa / Vfb < 1. More preferably $0 \leq$ Vf2 / Vf1 $\leq 0.8$, further preferably $0 \leq$ Vf2 / Vf1 $\leq 0.7$, is satisfied. A Vf2 / Vf1 value of 1 or more causes a larger amount of filler to exist on the film surface, causing the particles to slide off from the film surface, and in some cases, causing contamination of manufacturing process and interfacial peeling at the interface between a filler and a resin.

The filler content of the P2 layer, Vf2 (vol%) is preferably 0 to 5 vol% for enhancing the stretching properties of the film, more preferably 0 to 3 vol%, still more preferably 0 to 2 vol%. A content of more than 5 vol% causes the filler to slide off from the film surface, and in some cases, causes contamination of manufacturing process and interfacial peeling at the interface between a filler and a resin.

In addition, in order to inhibit the orientation of the film from decreasing and thus inhibit the mechanical strength and heat resistance from decreasing, and to inhibit a volatile component such as an oligomer from precipitating onto the film surface and thus inhibit contamination of manufacturing process from occurring, the film is preferably a laminate structure in which the P2 layer containing a polyester containing, as a constituent, the diol (B) whose main-chain has an odd number of carbon atoms is laminated on at least one side of the P1 layer, wherein the P2 layer contains a smaller amount of the polyester than the P1 layer. More preferable is a laminate structure in which the P2 layer containing a polyester containing, as a constituent, the diol (B) whose main-chain has an odd number of carbon atoms is laminated on both sides of the P1 layer, wherein the P2 layer contains a smaller amount of the polyester than the P1 layer.

In this case, $0 \leq M2 / M1 < 1$ is preferably satisfied so that the film can satisfy the above-mentioned relationship $0 \leq Ma / Mb < 1$, wherein M1 (mol%) is a ratio of the diol (B) whose main-chain has an odd number of carbon atoms to the diol components contained in the polyester of the P1 layer, and M2 (mol%) is a ratio of the diol (B) whose main-chain has an odd number of carbon atoms to the diol components contained in the polyester to the P2 layer. More preferably $0 \leq M2 / M1 \leq 0.8$, still more preferably $0 \leq M2 / M1 \leq 0.7$, is satisfied. An M1 / M2 value of 1 or more causes a larger amount of polyester containing, as a constituent, the diol (B) whose main-chain has an odd number of carbon atoms to exist in the surface layer of the film, and in some cases, the orientation of the film decreases, causing the mechanical strength and heat resistance to decrease, and a volatile component such as an oligomer precipitates onto the film surface, causing contamination of manufacturing process.

In respect of a ratio of the P1 layer to the P2 layer, a ratio of the P1 layer is preferably 50 vol% or more of the whole film, more preferably 60 vol% or more, still more preferably 70 vol% or more. In some cases, a P1 layer ratio of less than 50 vol% causes the thermal conductivity enhancement effect of the P1 layer to be insufficient.

Next, an example of the method of producing the oriented polyester film according to the present invention will be described below. The scope of the present invention, however, is not limited to the example.

The method of producing the oriented polyester film according to the present invention preferably includes the following steps 1 to 3 in this order:

(Step 1) the step of melt-kneading a polyester and a filler (hereinafter, referred to as the melt-kneading step);
(Step 2) the step of melting a resin composition containing a polyester and a filler and discharging the resulting resin composition through a nozzle to obtain a sheet-like film (hereinafter, referred to as the melt-extruding step); and
(Step 3) the step of biaxially stretching the sheet-like film (hereinafter, referred to as the stretching step).

Next, the steps 1 to 3 will be described in detail.

(Step 1)

The polyester as a raw material used in the method of producing the oriented polyester film according to the present invention is obtained by subjecting the dicarboxylic acid constituent and the diol constituent described above to esterification reaction or transesterification reaction for polycondensation reaction and thus achieving an intrinsic viscosity of 0.5 or more.

In the transesterification reaction, a known transesterification reaction catalyst such as magnesium acetate, calcium acetate, manganese acetate, or cobalt acetate may be used, and antimony trioxide or other substances to serve as a polymerization catalyst may be added. In cases where an alkali metal such as potassium hydroxide is added in an amount of several ppm in the esterification reaction, the heat resistance and hydrolysis resistance are enhanced. As the polycondensation reaction catalyst, a solution of germanium dioxide in ethylene glycol, antimony trioxide, a titanium alkoxide, or a titanium chelate compound may be used, for example. Additional additives may also be added to the extent that the effects of the present invention are not impaired, and examples of the additional additives include magnesium acetate for imparting electro-pinning properties and calcium acetate as a co-catalyst. In addition, various fillers for imparting film smoothness may be added, or fillers that contain a catalyst and are to be deposited inside the polyester film may be added.

In the method of producing the oriented polyester film according to the present invention, examples of methods of surface-treating a filler with a silane coupling agent include: a method i) in which the filler is dispersed in a solvent and to the resulting dispersion, a silane coupling agent or a solution or dispersion containing a dissolved or dispersed surface-treating agent is added while the dispersion is stirred; and a method ii) in which a solution or dispersion containing a dissolved or dispersed silane coupling agent is added to the filler while the dispersion is stirred.

Then, a preferable method of adding the filler to the polyester obtained above is a method in which the polyester and the filler are preliminarily melt-kneaded in a vented twin screw kneader-extruder or a tandem extruder. Here, the polyester is heated when the filler is added thereto, the polyester in no small amount is deteriorated. For this reason, it is preferable from the viewpoints of stretchability, mechanical properties, heat resistance and so on, that high-concentration master pellets having a larger filler content than the filler content of the P1 layer be produced, and the resulting pellets be mixed with pellets of polyester having a smaller filler content or pellets of polyester containing no filler and thus diluted so that the filler content of the P1 layer can be a prescribed amount.

The concentration of the filler in the high-concentration master pellets is preferably 20 mass% or more and 80 mass% or less, more preferably 25 mass% or more and 70 mass% or less, still more preferably 30 mass% or more and 60 mass% or less. In cases where the concentration is lower than 20 mass%, the amount of the master pellets added to the P1 layer is great and thereby the amount of deteriorated polyester in the P1 layer is great, potentially resulting in a decrease in stretchability, mechanical properties, heat resistance, and the like. In some of the cases where the concentration is higher than 80 mass%, it is difficult to prepare the master pellets or to uniformly mix the master pellets with the polyester.

In addition, it is particularly preferable in the light of enhancing the molecular weight of the polyester and enhancing the IV of the polyester that a type of pellets obtained before mixing or a pellet mixture obtained after mixing is allowed to undergo solid-phase polymerization and used in mixing high-concentration master pellets having a larger filler content, pellets of polyester having a smaller filler content, pellets of polyester containing no filler, and the like. A temperature for the solid-phase polymerization is preferably not lower than Tm - 60°C and not higher than Tm - 30°C, wherein Tm is the melting point of the polyester, and a degree of vacuum for the solid-phase polymerization is preferably 0.3 Torr or less.

In such a manner as above-mentioned, the resin composition containing a polyester and a filler is obtained.

(Step 2)

Next, the step of forming a sheet of the resin composition obtained in the step 1 containing a polyester and a filler will be described.

In cases where the oriented polyester film according to the present invention has a monolayer film structure composed of the P1 layer alone, sheet formation may be performed by heating and melting raw materials of the P1 layer in an extruder and then extruding the resulting product through a nozzle onto a cold casting drum (the melt casting method). Examples of other usable methods include dissolving raw materials of the P1 layer in a solvent and extruding the resulting solution through a nozzle onto a support such as a casting drum or an endless belt to form a film, followed by drying and removing the solvent from the film to form a sheet (the solution casting method). Among these methods, the melt casting method is more preferable from a high productivity viewpoint (hereinafter, the step of forming a sheet by the melt casting method is called the melt-extruding step).

In cases where the melt-extruding step is employed in the method of producing the oriented polyester film according to the present invention, a dried resin composition containing a polyester and a filler is subjected to melt-extrusion from an extruder through a nozzle to form a sheet, then the sheet is electrostatically adhered to, cooled on, and solidified on a drum the surface of which has been cooled to a temperature of 10°C or more and 60°C or less for solidification to prepare a non-stretched sheet-like film.

In carrying out melt-extrusion using an extruder, melting is performed in a nitrogen atmosphere. The duration of time after chip feeding into the extruder and before arrival at a nozzle for extrusion is preferably as short as possible. As a guide, the duration of time is preferably 30 minutes or less, more preferably 15 minutes or less, further preferably 5 minutes or less, for reducing degradation.

(Step 3)

The sheet obtained in the step 2 is biaxially stretched at a temperature not lower than the glass transition temperature Tg of the sheet. The method of biaxially stretching may be either sequential biaxial stretching in which stretching in a longitudinal direction and stretching in a width direction are performed separately as above-mentioned, or simultaneous biaxial stretching in which stretching in the longitudinal direction and stretching in the width direction are performed simultaneously. Stretching conditions may be as follows, for example: 1) in simultaneous biaxial stretching, the temperature is in a range from not lower than the glass transition temperature Tg of the polyester to not higher than Tg + 15°C; and 2) in sequential biaxial stretching, the stretching temperature for a first axial direction is not lower than the glass transition temperature Tg of the polyester and not higher than Tg + 15°C (more preferably not higher than Tg + 10°C) and the stretching temperature for a second axial direction is in a range from not lower than Tg + 5°C to not higher than Tg + 25°C.

In either of simultaneous biaxial stretching and sequential biaxial stretching, the stretch factor in either the longitudinal direction or the width direction is 1.5 or more and 4 or less. The stretch factor is more preferably 2.0 or more and 3.5 or less, further preferably 2.0 or more and 3.0 or less. The area stretch factor obtained from a combination of the stretch factor in the longitudinal direction and the stretch factor in the width direction is 2 or more and 16 or less, more preferably 4 or more and 12 or less, further preferably 4 or more and 8 or less. In cases where the area stretch factor is less than 2, the orientation of the polyester molecular chain in the resulting film is low, and in some cases, the mechanical strength and heat resistance of the resulting film are decreased. In cases where the area stretch factor is more than 14, breaking tends to occur during stretching, and many voids tend to be formed around the filler, decreasing the thermal conductivity.

The stretching rate is preferably 100 to 25,000%/min in the longitudinal direction and 50 to 5,000%/min in the width direction in sequential biaxial stretching, and is preferably 50 to 5,000%/min both in the longitudinal direction and in the width direction in simultaneous biaxial stretching. In some cases, a stretching rate in a preferable range can inhibit breaking from occurring more easily during stretching, and inhibit many voids from being formed around the filler and thus causing a decrease in thermal conductivity.

Next, to ensure that the resulting biaxially-stretched film is flat and dimensionally stable, heat treatment is performed at a temperature Th not lower than the glass transition temperature Tg of the polyester and lower than the melting point Tm of the polyester for a period of one second or more and 30 seconds or less, followed by slow and uniform cooling to room temperature. Regarding the heat treatment temperature Th in the method of producing the oriented polyester film according to the present invention, the difference Tm - Th between this heat treatment temperature and the melting point Tm of the polyester is 20°C or more and 90°C or less, more preferably 25°C or more and 70°C or less, further preferably 30°C or more and 60°C or less. During the heat treatment step, relaxing treatment to 3 to 12% in the width direction or the longitudinal direction may be performed, if necessary. Subsequently, corona discharge treatment and the like may be performed, if necessary, for further enhancing the adhesion to other materials.

In this regards, the method of producing the oriented polyester film according to the present invention that has a laminate structure including the P1 layer and an additional layer (hereinafter referred to as a P2 layer) is exemplified as follows. In cases where each layer material to be laminated contains a thermoplastic resin as a main constituent material, examples of usable methods include: a method in which two different materials are separately fed into the two respective extruders, followed by melting and coextruding the materials through nozzles onto a cold casting drum to form a sheet (coextrusion method); a method in which a coating layer material is fed into an extruder, melted, and extruded through a nozzle onto a sheet made of a single film (melt lamination method); a method in which the P1 layer and the P2 layer to be laminated are separately prepared and then allowed to undergo thermocompression bonding using heated rolls and the like (thermal laminating method); a method in which the materials are bonded to each other with an adhesive agent (adhesion method); a method in which the material or materials of the P2 layer are dissolved in a solvent and the resulting solution is applied to the P1 layer that has been prepared in advance (coating method); a combination of these methods; and the like. Among others, coextrusion is particularly preferable in the light of enhancing the adhesion at the laminate interface between the P1 layer and the P2 layer and enhancing the handling ability as insulating material.

In cases where the P2 layer contains, as a main constituent, a material that is not a thermoplastic resin, the P1 layer and the P2 layer to be laminated may be separately prepared and then bonded to each other with an adhesive agent or the like interposed therebetween (adhesion). In cases where the P2 layer is made of a curable material, the curable material may be applied to the top side of the P1 layer and then cured by electromagnetic wave irradiation, heat treatment, or the like. Other preferable examples of usable methods include dry processes such as vapor deposition method and sputtering method and wet processes such as plating method as well as the above-mentioned coextrusion, melt lamination method, solution lamination method, and thermal laminating method.

As the method of forming the P2 layer from different materials by coating method, either of the following methods may be employed: in-line coating method in which coating is performed during formation of the oriented polyester film; and offline coating method in which coating is performed after formation of the oriented polyester film. Among these methods, in-line coating is more preferable because of high efficiency of the coating that is performed simultaneously with formation of the polyester film and because of high interlaminar adhesion. In coating, surface treatment such as corona treatment is preferably carried out to the surface of the oriented polyester film that is a base material for coating because the treatment enhances the interlaminar adhesion.

The oriented polyester film according to the present invention may be produced by the above-mentioned steps, and the resulting film has high electrical insulating properties and thermal conductivity. The oriented polyester film according to the present invention can be suitably used, with the properties of the film advantageously utilized, in applications where electrical insulating properties and thermal conductivity are considered important, namely, applications including electrical insulating materials such as copper clad laminated boards, solar-cell back sheets, adhesive tape, flexible printed boards, membrane switches, planar heating elements, flat cables, insulation members for rotary electric machines, magnetic recording materials, capacitor materials, automobile materials, building materials, thermal ink-transfer printing materials, and electric cell materials. More specifically, such an oriented polyester film can be used to provide rotary electric machines, batteries, electronic equipment, and the like which have high energy efficiency.

[Method of Evaluation of Properties]

A. Thickness T of Oriented Polyester Film

The thickness of the oriented polyester film was measured using a dial gauge thickness indicator (manufactured by Mitutoyo Corporation) having a flat tip 4 mm in diameter. In this regard, ten different points were measured, and the average value of the measurements was regarded as the thickness T ($\mu$m) of the oriented polyester film.

B. Analysis of Composition of Polyester

The oriented polyester film was hydrolyzed with an alkali, and then gas chromatography or high-performance liquid chromatography was performed for analysis of each component. The peak area for each component was used to determine the composition ratio of the component. An example is shown below. A dicarboxylic acid constituent and other constituents were measured by high-performance liquid chromatography. The analysis can be suitably performed under known measurement conditions, and an example of the measurement conditions is shown below. The measurement was performed after the filler was separated by filtration.

Apparatus: Shimadzu LC-10A
Column: YMC-Pack ODS-A 150 × 4.6 mm S-5 $\mu$m 120A
Column temperature: 40°C
Flow rate: 1.2 ml/min
Detector: UV 240 nm
Quantification of the diol constituent and other constituents can be suitably performed by a known method based on gas chromatography. An example of the measurement conditions is shown below.
Apparatus: Shimadzu 9A (manufactured by Shimadzu Corporation)
Column: SUPELCOWAX-10 capillary column 30 m
Column temperature: 140°C to 250°C (temperature raising rate: 5°C/min)
Flow rate: nitrogen 25 ml/min
Detector: FID

C. Intrinsic Viscosity (IV)

The oriented polyester film (or the polyester layer (P1 layer) of the laminate film) was dissolved in 100 ml of o-chlorophenol (polyester concentration in solution, C, = 1.2 g/ml), and the viscosity of the resulting solution at 25°C was measured with an Ostwald viscometer. In the same manner, the viscosity of the solvent was also measured. From the viscosity of the solution and the viscosity of the solvent that were thus measured, [$\eta$] was calculated by the following equation (1), and the obtained value was regarded as the intrinsic viscosity (IV):

$$\eta sp / C = [\eta] + K[\eta]^2 \cdot C \qquad (1)$$

(wherein, $\eta$sp = (solution viscosity / solvent viscosity) - 1, and K is the Huggins' constant (considered to be 0.343)). Here, the measurement was performed after the filler was preliminarily separated by filtration.

D. Filler Content of P1 Layer

With reference to the oriented polyester film (or the P1 layer scraped off from the laminate film), the filler content of the P1 layer was determined by the following procedures (A1) to (A4).

(A1) The mass w1 (g) of the oriented polyester film (or the P1 layer scraped off from the laminate film) was measured.
(A2) The oriented polyester film (or the P1 layer scraped off from the laminate film) whose mass was measured in (A1) was dissolved in hexafluoro-2-isopropanol, and centrifugation was performed to fractionate insoluble components, which were particles.
(A3) The resulting particles were rinsed in hexafluoro-2-isopropanol, followed by centrifugation. The rinsing was repeated until a rinsing liquid yielded after centrifugation did not become cloudy by addition of ethanol.

(A4) The rinsing liquid in (A3) was heated and distilled, followed by air drying for 24 hours and then vacuum drying at a temperature of 60°C for five hours. Thus, a filler were obtained. The mass w2 (g) of the resulting filler was determined, and then the following equation (2) was used to calculate the filler content Wf (mass%).

$$Wf = (w2 / w1) \times 100 \quad (2)$$

E. Average Diameter of Filler

The filler obtained in the above-mentioned D section (A4) was measured for number average particle size using a laser diffraction particle size analyzer (SALD-2100, manufactured by Shimadzu Corporation), and the obtained particle size was regarded as an average diameter of the filler.

F. Thermal Diffusivity

A piece having a size of 1 cm $\times$ 1.5 cm was cut out of the oriented polyester film, and measured for thermal diffusivity, $\alpha$ (m$^2$/s), in the thickness direction of the film at a measurement temperature of 25°C using a periodical heating method thermal diffusivity measurement system (FTC-1, manufactured by Advance Riko, Inc.). The measurement was repeated four times, and the average value of the measurements was regarded as the thermal diffusivity.

G. Breakdown Voltage

A square piece having a size of 25 cm $\times$ 25 cm was cut out of the oriented polyester film, conditioned in a room at 23°C and 65%Rh for 24 hours, and then, measured for breakdown voltage (kV/mm) per unit thickness in accordance with JIS C2151 (2006) at a frequency of 60 Hz at a boosting rate of 1,000 V/sec using an AC insulation/withstanding hitester (AC, 30 kV, manufactured by Kasuga Denki, Inc.). The measurement was repeated ten times, and the average value of the measurements was regarded as the breakdown voltage.

H. Surface Specific Resistance

The surface specific resistance was measured using a digital ultrahigh-resistance micro ammeter R8340 (manufactured by Advantest Corporation). The measurement was performed for each side of the oriented polyester film, at any ten positions on each side, and the average value of the measurements for each side was determined. The smaller average value was regarded as the surface specific resistance. Before the measurement, the sample had been left overnight in a room at 23°C and 65%Rh. The resulting value was used in the following evaluation. Samples having a value within the range A are suitable for practical use.

A: Surface specific resistance of $1.0 \times 10^{13}$ $\Omega/\square$ or more
C: Surface specific resistance of less than $1.0 \times 10^{13}$ $\Omega/\square$

I. Heat Radiation as Insulating Material

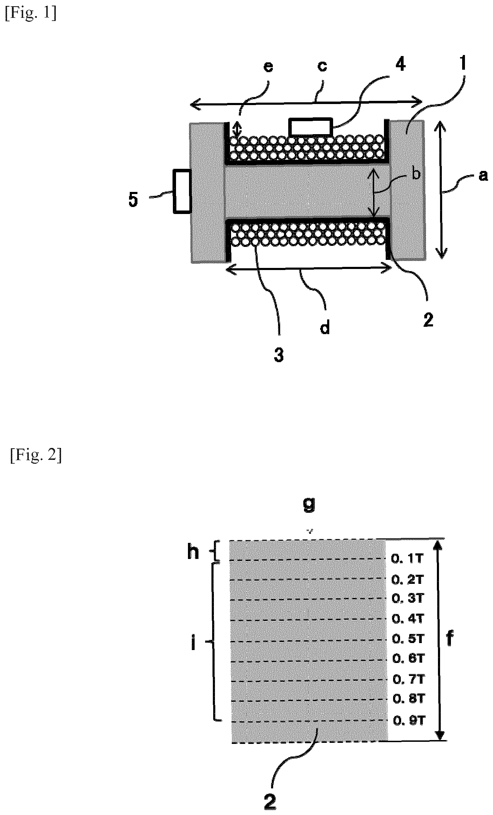

A stainless-steel-made bobbin (whose body portion has no hollow portion), 60 mm in collar diameter, 20 mm in body diameter, 100 mm in full length, and 80 mm in internal width, and the oriented polyester film formed to have a thickness of 125 $\mu$m were provided. Next, the oriented polyester film was placed in such a manner that the film covered all of the surface of the body portion and the inner surfaces of the collars that corresponded to the inner wall of the bobbin, and in such a manner that the film did not overlap itself (Fig. 1). Then, a copper wire having a wire diameter of 1 mm was wound in solenoid form around the bobbin in such a manner that the width of the winding clearance was within 2 mm. Next, two attachment type thermistors were provided, one of them (hereinafter referred to as the copper wire side thermistor) was attached to the central portion of the wound copper wire, and the other (hereinafter referred to as the bobbin side thermistor) was attached to the exterior of one of the collars of the bobbin. Next, electric current was applied to the wound copper wire with the voltage adjusted in such a manner that the power consumption was 3W, the copper wire was thus allowed to generate heat and left to stand until the temperatures of the two thermistors both reached a saturation point, the temperature Ta of the copper wire side thermistor and the temperature Tb of the bobbin side thermistor were each measured, and the heat dissipation was evaluated from a temperature difference between these on the basis of the following judgement criteria. S, A, and B are suitably used as insulating materials having high heat dissipation.

S: Ta - Tb is less than 0.3°C
A: Ta - Tb is 0.3°C or more and less than 1°C
B: Ta - Tb is 1°C or more and less than 2°C
C: Ta - Tb is 2°C or more

J. Handling Ability as Insulating Material

The oriented polyester film was bent in angular C-shape using a motor processing machine (manufactured by Odawara Engineering Co., Ltd.). Specifically, a rectangular piece, 12 mm × 80 mm, was stamped from the film, and the shorter side was bent in three places at 4 mm intervals. The processing steps from stamping to folding were sequentially carried out to prepare 100 test pieces, which were evaluated for handling ability on the basis of the following judgement criteria. A and B are suitably used as insulating materials having high handling ability.

A: No breaking nor cracking has occurred on any test piece.
B: Breaking or cracking has occurred on one or more and less than five test pieces.
C: Breaking or cracking has occurred on five or more test pieces.

K. Heat Resistance as Insulating Material

First, in accordance with ASTM-D882 (the 1997 version), a strip-shaped piece, 1 cm × 20 cm, was cut out from the oriented polyester film, and the fracture elongation was measured when the piece was pulled with a distance of 5 cm between the chucks at a tension rate of 300 mm/min at room temperature using a tensile testing machine (TENSILONAMF/RTA-100 manufactured by Orientec Co., Ltd.). In this regard, a direction on the sample was regarded as a measurement direction of 0°, the fracture elongation was measured with sampling carried out in varying directions at 10° intervals from -90° to 90° over the film face, and the arithmetic mean value of the all obtained data was regarded as the fracture elongation Sa of the sample obtained before a heat resistance test. Here, the direction in which the fracture elongation was the smallest when the fracture elongation was measured in varying directions was defined as the longitudinal direction of the film.
Next, a strip-shaped sample was cut out in the same manner as above-mentioned, then heat-treated in a hot air oven at 180°C for 24 hours, and left to cool to room temperature, and then the fracture elongation Sb resulting after the heat resistance test was determined in the same manner as above-mentioned.
Next, the elongation retention was calculated using the following equation (3) from the fracture elongation values obtained before and after the heat resistance test, and the heat resistance was evaluated in accordance with the following judgement criteria. A and B are suitably used as insulating materials having high heat resistance.

$$\text{Elongation Retention (\%)} = Sb\,/\,Sa \times 100 \qquad (3)$$

A: Elongation retention of 70% or more
B: Elongation retention of 50% or more and less than 70%
C: Elongation retention of less than 50%

L. Mechanical Properties

A folding endurance test was carried out by the method conforming to JIS P8115 (2001). A strip-shaped piece having a width of 15 mm was sampled from the oriented polyester film, and measured using an MIT fold tester manufactured by MYS-TESTER Company Limited under the conditions: a load of 9.8 N, a speed of 175 times/min, a radius of curvature (R) of 0.38 mm, a clearance of 0.25 mm, and a folding angle of 135° right and left. The resulting value was used in the following evaluation. Samples having the values within the ranges S, A, and B are suitable for practical use.

S: The number of times of folding was 1,000 or more until fracture occurred.
A: The number of times of folding was 500 or more and less than 1,000 until fracture occurred.
B: The number of times of folding was 100 or more and less than 500 until fracture occurred.
C: The number of times of folding was less than 100 until fracture occurred.

M. Adhesion to Smooth Face

A thermosetting adhesive agent was uniformly applied on both sides of the oriented polyester film in such a manner that the film had a thickness of 5 μm when dried, and a PPS film "Torelina" (registered trademark) (type 3030, 16 μm in thickness) made by Toray Industries, Inc. was attached to both sides of the film by thermal laminating with the adhesive agent inbetween. A sample, 10 mm in width and 200 mm in length, was cut out, and the sample was measured using a tensile testing machine manufactured by DAIEI KAGAKU SEIKI MFG. CO., LTD. in accordance with JIS K 6854-2 (1999) under the conditions: a speed of 200 mm/min, a peeling angle of 180°, and hold. A best-fit load straight line was introduced by best-fit straight line approximation from the obtained measurement data on the peeling length (mm) and peeling load (N) to determine the 180° peel strength. Ten measurements were taken from each of both sides of the film, the average value of each side was calculated, and the smaller average value was used to judge the adhesion to a smooth face in accordance with the following criteria. S, A, and B are preferable for practical use.

    S: 5.0 N/cm or more
    A: 3.0 N/cm or more and less than 5.0 N/cm
    B: 1.0 N/cm or more and less than 3.0 N/cm
    C: less than 1.0 N/cm

O. Vfa / Vfb

The Vfa / Vfb value was determined by the following procedures (B1) to (B6). In this regard, measurement was performed on ten different randomly cut cross-sections in the oriented polyester film, and the arithmetic mean of the measurements was regarded as the Vfa / Vfb value. Measurement was performed individually on each of the back and front surfaces of the oriented polyester film, and the Vfa / Vfb value was determined for each surface.

    (B1) Using a microtome, the film is cut vertically to the planar direction of the oriented polyester film and parallel to the longitudinal direction (the direction defined in the measurement of fracture elongation) of the film, without crushing the cross-section of the film in the thickness direction.
    (B2) The cross-section is observed with a scanning electron microscope, and an image enlarged 3,000 times is obtained. The observation is performed for a randomly selected position in the image provided that the direction from the lower end to the upper end of the image is parallel to the thickness direction of the film and the direction from the left end to the right end of the image is parallel to the longitudinal direction of the film. In addition, the observation position was moved in the thickness direction, and a continual image from one surface to the other was prepared.
    (B3) As shown in Fig. 2, the area of the thickness region, 0 to 0.1T, relative to one surface in the image obtained in (B2) (the whole area containing the voids of the film and the area of the filler) is measured and regarded as Aa. In the same manner, the area of the thickness region, 0.1T to 0.9T, relative to the one surface is measured, and the whole area is regarded as Ab.
    (B4) In the film in the image, the area of all the filler in the thickness region, 0 to 0.1T, relative to the one surface is measured, and the whole area is regarded as Ba. The subject of measurement in the thickness region, 0 to 0.1T, encompassed not only the filler that is entirely included within the image but also the filler that is only partially included within the image. When it is difficult to distinguish the positions of the filler in the image, energy dispersive X-ray analysis is separately performed to the cross-section of the same sample, and parts corresponding to inorganic matter are distinguished, followed by calculating the area of the filler. In the same manner, the area of all the filler in the thickness region, 0.1T to 0.9T, relative to the one surface is measured, and the whole area is regarded as Bb.
    (B5) The value Ba is divided by the value Aa, and the resulting value (Ba / Aa) is multiplied by 100 to determine the area ratio of the inorganic particles in the thickness region, 0 to 0.1T, relative to the one surface. This value is regarded as the filler content Vfa (vol%) in the region from the surface to thickness position 0.1T. In the same manner, the value Bb is divided by the value Ab, the value (Bb / Ab) is multiplied by 100, and the resulting value is regarded as the filler content Vfb (vol%) in the region, 0.1T to 0.9T.
    (B6) The value Vfa is divided by the value Vfb to calculate the value Vfa / Vfb.

P. Ma/Mb

The Ma / Mb value was determined by the following procedures (C1) to (C6). In this regard, the oriented polyester film was changed to another one, on which measurement was performed a total of ten times, and the arithmetic mean of the measurements was regarded as the Ma / Mb value. Measurement was performed individually on each of the back and front surfaces of the oriented polyester film, and the Ma / Mb value was determined for each surface.

(C1) The oriented polyester film is fixed on a flat seat, and one surface of the film is ground uniformly using a file.

(C2) The grinding operation of C1 is carried out with the film thickness measured when necessary, and, as shown in Fig. 2, the region from one surface to the thickness position 0.1T is ground. When the remaining film thickness reaches a thickness of 0.9T uniformly over the film plane, the grinding is once stopped, and all grinding chips produced from the grinding are collected.

(C3) The grinding chips collected as above-mentioned are subjected to composition analysis of the polyester by the method of the B section, and a ratio of the diol whose main-chain has an odd number of carbon atoms to the diol components contained in the polyester is calculated as Ma (mol%).

(C4) The grinding operation once stopped in (C2) is resumed, the region from one surface to the thickness position 0.9T is ground. The grinding is carried out until the remaining film thickness reaches a thickness of 0.1T uniformly over the film plane, and all grinding chips produced from the grinding are collected.

(C5) The grinding chips collected as above-mentioned are subjected to composition analysis of the polyester by the method of the B section, and a ratio of the diol whose main-chain has an odd number of carbon atoms to the diol components contained in the polyester is calculated as Mb (mol%).

(C6) The Ma value was divided by the Mb value to calculate the Ma / Mb value.

Q. Orientation (Orientation Parameter)

A cross-section vertically to the film face is cut out using a microtome, and the cross-section was measured in accordance with the following procedures (D1) to (D3) using an in VIA microscopic Raman spectrometer manufactured by RENISHAW plc under the conditions: a 100x magnification objective lens; a beam diameter of 1 $\mu$m; second harmonic (having a wavelength of 532 nm) of YAG laser as a light source; a laser power of 100 mW; a diffraction grating, Single, 3,000 gr/mm; a slit of 65 $\mu$m; and a detector, CCD/RENISHAW, 1024 $\times$ 256.

In this regard, when a plurality of peaks having strong sensitivity to anisotropy existed, for example, when a plurality of resins were mixed, the peak having the highest peak intensity was used to determine the orientation parameter.

(D1) A Raman band is determined individually when polarized light in the direction parallel to the in-plane direction of the film is irradiated and when polarized light in the direction vertical to the in-plane direction is irradiated.

(D2) From the obtained Raman band, the peak intensity of C=C stretching vibration at or near 1615 cm$^{-1}$ is individually determined, the peak intensity with which polarized light in the parallel direction is irradiated is regarded as Is (parallel), and the peak intensity with which polarized light in the vertical direction is irradiated is regarded as Is (vertical).

(D3) A ratio Is (parallel)/Is (vertical) of Is (parallel) to Is (vertical) is regarded as an orientation parameter.

When the cross-section vertical to the film face was cut out using a microtome, the cutting direction was varied at 10° intervals from -90° to 90° over the film face, each cross-section was subjected to the above-mentioned measurement, and the orientation was judged in accordance with the following criteria. A is preferable for practical use.

A: The orientation parameter is 1.2 or more in at least one direction.
C: The orientation parameter is less than 1.2 in all directions.

EXAMPLES

Below, the present invention will be described with reference to Examples, but the present invention is not limited to these Examples.

(Raw materials)

- Polyester:

Polyester-1: terephthalic acid as an acid component and 1,2-ethanediol as a diol component were used for polycondensation reaction to obtain polyethylene terephthalate pellets having an intrinsic viscosity of 0.7.

Polyester-2: DFG1 (manufactured by Bell Polyester Products, Inc.) was used. This was a polyethylene terephthalate having an intrinsic viscosity of 1.1.

Polyester-3: "Sorona (registered trademark)" Bright (manufactured by DuPont Co., Ltd.) was used. This was a polytrimethylene terephthalate having an intrinsic viscosity of 1.1.

Polyester-4: 2,6-naphthalene dicarboxylic acid as an acid component and 1,2-ethanediol as a diol component were used for polycondensation reaction to obtain polyester pellets having an intrinsic viscosity of 0.6.

Polyester-5: "TORAYCON (registered trademark)" 1200S (manufactured by Toray Industries, Inc.) was used. This was a polybutylene terephthalate having an intrinsic viscosity of 1.3.

Polyester-6: terephthalic acid as an acid component and 1,5-pentanediol as a diol component were used for polycondensation reaction to obtain polyester pellets having an intrinsic viscosity of 0.7.

Polyester-7: terephthalic acid as an acid component and 1,2-ethanediol and 1,3-propanediol at a molar ratio of 75:25 as two diol components were used for polycondensation reaction to obtain polyester pellets having an intrinsic viscosity of 0.8.

- Filler

Filler-1: Wollastonite (FPW#400 manufactured by KINSEI MATEC CO., LTD.) having an average diameter of 14 $\mu$m was added to a henschel mixer and stirred, and to the Wollastonite which was being stirred, a silane coupling agent (KBM-403 manufactured by Shin-Etsu Chemical Co., LTD.) was added by spraying in such a manner that the amount of the silane coupling agent was 1 mass% with respect to 100 mass% of the Wollastonite. The resulting mixture was heated with stirring at 70°C for two hours, and taken out to obtain surface-treated Wollastonite.

Filler-2: surface-treated aluminosilicate (SILATHERM T 1360-012 EST manufactured by Quarzwerke GmbH) having an average diameter of 16 $\mu$m was used.

Filler-3: a multilayer carbon nanotube having an average fiber diameter of 0.06 $\mu$m and an average fiber length of 10 $\mu$m was used.

- Master Pellets

MB-1: a vented twin screw co-rotating kneader-extruder (manufactured by Japan Steel Works, Ltd.; a screw diameter of 30 mm; screw length / screw diameter = 45.5) was heated to 275°C, and then, 60 parts by mass of Polyester-1 and 40 parts by mass of Filler-1 were fed to the kneader-extruder, followed by melt-kneading. The resulting melt-kneaded product was discharged in strand form and cooled in water at a temperature of 25°C. Immediately after the cooling, the resulting strand was cut to prepare master pellets (MB-1) containing 40 mass% of Filler-1.

MB-2: The master pellets (MB-1) were dried at 160°C for six hours for crystallization and then subjected to solid-phase polymerization at 220°C and a degree of vacuum of 0.3 Torr for six hours. Thus, master pellets (MB-2) were prepared.

MB-3: a vented twin screw co-rotating kneader-extruder (manufactured by Japan Steel Works, Ltd.; a screw diameter of 30 mm; screw length / screw diameter = 45.5) was heated to 275°C, and then, 60 parts by mass of Polyester-1 and 40 parts by mass of Filler-2 were fed to the kneader-extruder, followed by melt-kneading. The resulting melt-kneaded product was discharged in strand form and cooled in water at a temperature of 25°C. Immediately after the cooling, the resulting strand was cut to prepare master pellets (MB-3) containing 40 mass% of Filler-2.

MB-4: a vented twin screw co-rotating kneader-extruder (manufactured by Japan Steel Works, Ltd.; a screw diameter of 30 mm; screw length / screw diameter = 45.5) was heated to 275°C, and then, 20 parts by mass of Polyester-1, 20 parts by mass of Polyester-3, and 60 parts by mass of Filler-1 were fed to the kneader-extruder, followed by melt-kneading. The resulting melt-kneaded product was discharged in strand form and cooled in water at a temperature of 25°C. Immediately after the cooling, the resulting strand was cut to prepare master pellets (MB-4) containing 60 mass% of Filler-1.

MB-5: a vented twin screw co-rotating kneader-extruder (manufactured by Japan Steel Works, Ltd.; a screw diameter of 30 mm; screw length / screw diameter = 45.5) was heated to 255°C, and then, 60 parts by mass of Polyester-5 and 40 parts by mass of Filler-1 were fed to the kneader-extruder, followed by melt-kneading. The resulting melt-kneaded product was discharged in strand form and cooled in water at a temperature of 25°C. Immediately after the cooling, the resulting strand was cut to prepare master pellets (MB-5) containing 40 mass% of Filler-1.

MB-6: a vented twin screw co-rotating kneader-extruder (manufactured by Japan Steel Works, Ltd.; a screw diameter of 30 mm; screw length / screw diameter = 45.5) was heated to 300°C, and then, 60 parts by mass of Polyester-4 and 40 parts by mass of Filler-1 were fed to the kneader-extruder, followed by melt-kneading. The resulting melt-kneaded product was discharged in strand form and cooled in water at a temperature of 25°C. Immediately after the cooling, the resulting strand was cut to prepare master pellets (MB-6) containing 40 mass% of Filler-1.

MB-7: a vented twin screw co-rotating kneader-extruder (manufactured by Japan Steel Works, Ltd.; a screw diameter of 30 mm; screw length / screw diameter = 45.5) was heated to 275°C, and then, 60 parts by mass of Polyester-7 and 40 parts by mass of Filler-1 were fed to the kneader-extruder, followed by melt-kneading. The resulting melt-kneaded product was discharged in strand form and cooled in water at a temperature of 25°C. Immediately after the cooling, the resulting strand was cut to prepare master pellets (MB-7) containing 40 mass% of Filler-1.

MB-8: a vented twin screw co-rotating kneader-extruder (manufactured by Japan Steel Works, Ltd.; a screw diameter of 30 mm; screw length / screw diameter = 45.5) was heated to 275°C, and then, 15 parts by mass of Polyester-1, 15 parts by mass of Polyester-3, and 70 parts by mass of Filler-1 were fed to the kneader-extruder, followed by melt-kneading. The resulting melt-kneaded product was discharged in strand form and cooled in water at a temperature of 25°C. Immediately after the cooling, the resulting strand was cut to prepare master pellets (MB-8) containing 70 mass% of Filler-1.

MB-9: a vented twin screw co-rotating kneader-extruder (manufactured by Japan Steel Works, Ltd.; a screw diameter of 30 mm; screw length / screw diameter = 45.5) was heated to 255°C, and then, 60 parts by mass of Polyester-3 and 40 parts by mass of Filler-1 were fed to the kneader-extruder, followed by melt-kneading. The resulting melt-kneaded product was discharged in strand form and cooled in water at a temperature of 25°C. Immediately after the cooling, the resulting strand was cut to prepare master pellets (MB-9) containing 40 mass% of Filler-1.

MB-10: a vented twin screw co-rotating kneader-extruder (manufactured by Japan Steel Works, Ltd.; a screw diameter of 30 mm; screw length / screw diameter = 45.5) was heated to 275°C, and then, 20 parts by mass of Polyester-1, 40 parts by mass of Polyester-3, and 40 parts by mass of Filler-2 were fed to the kneader-extruder, followed by melt-kneading. The resulting melt-kneaded product was discharged in strand form and cooled in water at a temperature of 25°C. Immediately after the cooling, the resulting strand was cut to prepare master pellets (MB-10) containing 40 mass% of Filler-2.

MB-11: a vented twin screw co-rotating kneader-extruder (manufactured by Japan Steel Works, Ltd.; a screw diameter of 30 mm; screw length / screw diameter = 45.5) was heated to 275°C, and then, 96 parts by mass of Polyester-1 and 4 parts by mass of Filler-3 were fed to the kneader-extruder, followed by melt-kneading. The resulting melt-kneaded product was discharged in strand form and cooled in water at a temperature of 25°C. Immediately after the cooling, the resulting strand was cut to prepare master pellets (MB-11) containing 4 mass% of Filler-3.

(Example 1)

Three kinds of raw materials: 50 parts by mass of the master pellets (MB-1), 30 parts by mass of Polyester-3, and 20 parts by mass of Polyester-2 were mixed, dried in vacuo at a temperature of 180°C for three hours, and then fed into an extruder for melting in a nitrogen atmosphere at a temperature of 280°C, followed by transfer into a T-die nozzle. Through the T-die nozzle, the resulting mixture was extruded in sheet form. By a method of electro-pinning, the resulting melted sheet was adhered to, cooled on, and solidified on a drum the surface of which had been maintained at a temperature of 25°C, for solidification. Thus, a non-stretched sheet-like film was obtained.

Subsequently, the resulting non-stretched film was preheated using rolls heated to a temperature of 90°C, and then stretched, using a roll heated to a temperature of 100°C, at a speed of 7,000%/min at a stretch factor of 2.5 in the longitudinal direction (length direction), followed by cooling using rolls at a temperature of 25°C. Thus, a uniaxially-stretched film was obtained. The resulting uniaxially-stretched film was held at both ends with clips and transferred to a preheating zone at a temperature of 90°C located in a tenter, continuously followed by stretching in a heating zone at a temperature of 100°C at a speed of 200%/min at a stretch factor of 2.5 in the direction (width direction) orthogonal to the longitudinal direction. Subsequently, heat treatment was performed in a heat treatment zone 1 in the tenter at a temperature of 220°C for 20 seconds, then in a heat treatment zone 2 at a temperature of 150°C. In the heat treatment, 4% relaxing treatment was performed between the heat treatment zone 1 and the heat treatment zone 2. Subsequently, slow and uniform cooling was performed, followed by winding. Thus, an oriented polyester film having a thickness of 125 μm was obtained.

Properties of the resulting film were evaluated, and the results are shown in Table 1. The results have proven that the film has excellent heat dissipation, handling ability, and heat resistance.

(Examples 2 to 5, Examples 8 to 11, Example 13, and Example 15)

An oriented polyester film having a thickness of 125 μm was obtained in the same manner as in Example 1 except that the raw materials used for film-formation were as in Table 1. Properties of the resulting film were evaluated, and the results are shown in Table 1.

(Example 6, Example 7, and Example 12)

An oriented polyester film having a thickness of 125 μm was obtained in the same manner as in Example 1 except that the raw materials used for film-forming were as in Table 1, the melting temperature during film-forming was changed to 250°C, the preheat temperature during stretching and the stretching temperature were changed to 65°C and 75°C respectively, and the temperature in the heat treatment zone 1 was changed to 190°C. Properties of the resulting film were evaluated, and the results are shown in Table 1.

(Example 14)

An oriented polyester film having a thickness of 125 μm was obtained in the same manner as in Example 1 except that the raw materials used for film-forming were as in Table 1, the melting temperature during film-forming was changed to 310°C, the preheat temperature during stretching and the stretching temperature were changed to 115°C and 125°C respectively, and the temperature in the heat treatment zone 1 was changed to 260°C. Properties of the resulting film were evaluated, and the results are shown in Table 1.

(Example 16)

An oriented polyester film having a thickness of 125 μm was obtained in the same manner as in Example 1 except that the stretch factors in film-forming were changed to 2.7 in the longitudinal direction and 3.1 in the width direction. Properties of the resulting film were evaluated, and the results are shown in Table 1.

(Comparative Example 1 and Comparative Examples 3 to 5)

An oriented polyester film having a thickness of 125 μm was obtained in the same manner as in Example 1 except that the raw materials used for film-formation were as in Table 1. Properties of the resulting film were evaluated, and the results are shown in Table 1. The film in Comparative Example 3 caused multiple breaks during stretching and was impossible to complete as a film, and other films were formed but had insufficient heat radiation as insulating materials.

(Comparative Example 2 and Comparative Example 6)

An oriented polyester film having a thickness of 125 μm was obtained in the same manner as in Example 1 except that the raw materials used for film-forming were as in Table 1, the melting temperature during film-forming was changed to 250°C, the preheat temperature during stretching and the stretching temperature were changed to 65°C and 75°C respectively, and the temperature in the heat treatment zone 1 was changed to 190°C. Properties of the resulting film were evaluated, and the results are shown in Table 1. Both films had insufficient heat radiation as insulating materials.

(Comparative Example 7)

An oriented polyester film having a thickness of 125 μm was obtained in the same manner as in Comparative Example 1 except that the stretch factors in film-forming were changed to 2.7 in the longitudinal direction and 3.1 in the width direction. Properties of the resulting film were evaluated, and the results are shown in Table 1. The obtained film had insufficient heat radiation as insulating materials.

(Comparative Example 8)

Two kinds of raw materials: 50 parts by mass of the master pellets (MB-11) and 50 parts by mass of Polyester-2 were mixed, dried in vacuo at a temperature of 180°C for three hours, and then fed into an extruder for melting in a nitrogen atmosphere at a temperature of 280°C, followed by transfer into a T-die nozzle. Through the T-die nozzle, the resulting mixture was extruded in sheet form. By a method of electro-pinning, the resulting melted sheet was adhered to, cooled on, and solidified on a drum the surface of which had been maintained at a temperature of 25°C, for solidification. Thus, a non-stretched sheet-like film having a thickness of 125 μm was obtained. Properties of the resulting film were evaluated, and the results are shown in Table 1. The obtained film had low insulating properties and insufficient heat radiation as insulating materials.

(Example 17)

Two kinds of raw materials: 50 parts by mass of the master pellets (MB-10) and 50 parts by mass of Polyester-2 were mixed, dried in vacuo at a temperature of 180°C for three hours, and then fed into an extruder for melting in a nitrogen atmosphere at a temperature of 280°C, followed by transfer into a T-die nozzle. Through the T-die nozzle, the resulting mixture was extruded in sheet form. By a method of electro-pinning, the resulting melted sheet was adhered to, cooled on, and solidified on a drum the surface of which had been maintained at a temperature of 25°C, for solidification. Thus, a non-stretched sheet-like film was obtained.
Subsequently, the resulting non-stretched film was preheated using rolls that were heated to a temperature of 90°C, and then stretched, using a roll heated to a temperature of 100°C, at a speed of 7,000%/min at a stretch factor of 2.0 in the longitudinal direction (length direction), followed by cooling using rolls at a temperature of 25°C. Thus, a uniaxially-stretched film was obtained. The resulting uniaxially-stretched film was held at both ends with clips and transferred to a preheating zone at a temperature of 90°C located in a tenter, continuously followed by stretching in a heating zone at a temperature of 100°C at a speed of 200%/min at a stretch factor of 3.0 in a direction (width direction) orthogonal to the longitudinal direction. Subsequently, heat treatment was performed in a heat treatment zone 1 in the tenter at a temperature of 220°C for 20 seconds, then in a heat treatment zone 2 at a temperature of 150°C. In the heat treatment, 4% relaxing treatment was performed between the heat treatment zone 1 and the heat treatment zone 2. Subsequently, slow and uniform cooling was performed, followed by winding. Thus, an oriented polyester film having a thickness of 125 μm was obtained. Properties of the resulting film were evaluated, and the results are shown in Table 2.

(Example 18)

Two extruders (Extruder A and Extruder B) were provided. Two kinds of raw materials: 50 parts by mass of the master pellets (MB-10) and 50 parts by mass of Polyester-2 were mixed, and the resulting mixture was dried in vacuo at a temperature of 180°C for three hours, and then fed into Extruder A. Polyester-1 alone was dried in vacuo at a temperature of 180°C for three hours, and then fed into Extruder B. The fed resins were melted in a nitrogen atmosphere in the respective extruders at a temperature of 280°C, and then laminated in three layers in such a manner that the resin from Extruder B was layered on both surface layers of the resin from Extruder A. The resulting laminate was introduced into the T-die nozzle. Here, the resins were layered in such a manner that the three-layered laminate had a thickness ratio of 1:10:1. Through the T-die nozzle, the resulting mixture was extruded in sheet form. By a method of electropinning, the resulting melted sheet was adhered to, cooled on, and solidified on a drum the surface of which had been maintained at a temperature of 25°C, for solidification. Thus, a non-stretched sheet-like film was obtained.
Subsequently, the resulting non-stretched film was preheated using rolls that were heated to a temperature of 90°C, and then stretched, using a roll heated to a temperature of 100°C, at a speed of 7,000%/min at a stretch factor of 2.0 in the longitudinal direction (length direction), followed by cooling using rolls at a temperature of 25°C. Thus, a uniaxially-stretched film was obtained. The resulting uniaxially-stretched film was held at both ends with clips and transferred to a preheating zone at a temperature of 90°C located in a tenter, continuously followed by stretching in a heating zone at a temperature of 100°C at a speed of 200%/min at a stretch factor of 3.0 in a direction (width direction) orthogonal to the longitudinal direction. Subsequently, heat treatment was performed in a heat treatment zone 1 in the tenter at a temperature of 220°C for 20 seconds, then in a heat treatment zone 2 at a temperature of 150°C. In the heat treatment, 4% relaxing treatment was performed between the heat treatment zone 1 and the heat treatment zone 2. Subsequently, slow and uniform cooling was performed, followed by winding. Thus, an oriented polyester film having a thickness of 125 μm was obtained. Properties of the resulting film were evaluated, and the results are shown in Table 2.

(Example 19 and Example 20)

An oriented polyester film having a thickness of 125 μm was obtained in the same manner as in Example 18 except that the layer thickness ratio of the three layers of the laminate was changed as shown in Table 2. Properties of the resulting film were evaluated, and the results are shown in Table 2.

(Example 21)

An oriented polyester film having a thickness of 125 μm was obtained in the same manner as in Example 18 except that two kinds of raw materials: 25 parts by mass of the master pellets (MB-1) and 75 parts by mass of Polyester-1 were mixed and that the resulting mixture was dried in vacuo at a temperature of 180°C for three hours, and then fed into Extruder B. Properties of the resulting film were evaluated, and the results are shown in Table 2.

(Example 22)

An oriented polyester film having a thickness of 125 μm was obtained in the same manner as in Example 18 except that the resin from Extruder B and the resin from Extruder A were each introduced into the T-die nozzle in such a manner that the resins were laminated in two layers at a ratio of 1:10. Properties of the resulting film were evaluated, and the results are shown in Table 2.

[Table 1-1]

| | Example 1 | Example 2 | Example 3 | Example 4 | Example 5 | Example 6 | Example 7 | Example 8 |
|---|---|---|---|---|---|---|---|---|
| Raw Materials (parts by mass) | MB-1 (50) | MB-2 (50) | MB-3 (50) | MB-1 (50) | MB-1 (50) | MB-1 (50) | MB-1 (50) | MB-1 (37.5) |
| | Polyester-3 (30) | Polyester-3 (30) | Polyester-3 (30) | Polyester-3 (15) | Polyester-3 (5) | Polyester-3 (45) | Polyester-3 (50) | Polyester-3 (30) |
| | Polyester-2 (20) | Polyester-2 (20) | Polyester-2 (20) | Polyester-2 (35) | Polyester-2 (45) | Polyester-2 (5) | - | Polyester-2 (32.5) |
| Diol (A) | 1,2-ethanediol | 1,2-ethanediol | 1,2-ethanediol | 1,2-ethanediol | 1,2-ethanediol | 1,2-ethanediol | 1,2-ethanediol | 1,2-ethanediol |
| Diol (B) | 1,3-propanediol | 1,3-propanediol | 1,3-propanediol | 1,3-propanediol | 1,3-propanediol | 1,3-propanediol | 1,3-propanediol | 1,3-propanediol |
| Mol Ratio (A)/(B) | 63/38 | 63/38 | 63/38 | 81/19 | 94/6 | 44/56 | 38/63 | 65/35 |
| Intrinsic Viscosity of P1 Layer Polyester | 0.7 | 0.8 | 0.71 | 0.71 | 0.73 | 0.66 | 0.74 | 0.72 |
| Filler content — mass% | 20 | 20 | 20 | 20 | 20 | 20 | 20 | 15 |
| Thermal Diffusivity in the Thickness Direction — $\times 10^{-7} m^2/s$ | 1.91 | 2.2 | 2.1 | 1.83 | 1.75 | 1.84 | 1.77 | 1.79 |
| Breakdown Voltage — kV/mm | 95 | 105 | 112 | 93 | 90 | 93 | 94 | 100 |
| Surface Specific Resistance | A | A | A | A | A | A | A | A |
| Orientation | A | A | A | A | A | A | A | A |
| Heat Radiation as Insulating Material | A | S | S | A | B | A | B | B |
| Handling Ability as Insulating Material | A | A | A | A | A | A | A | A |
| Heat Resistance as Insulating Material | A | A | A | A | A | B | B | A |

[Table 1-2]

| | | Example 9 | Example 10 | Example 11 | Example 12 | Example 13 | Example 14 | Example 15 | Example 16 |
|---|---|---|---|---|---|---|---|---|---|
| Raw Materials (parts by mass) | | MB-1 (25) | MB-4 (75) | MB-4 (92) | MB-5 (50) | MB-1 (50) | MB-6 (50) | MB-7 (50) | MB-1 (50) |
| | | Polyester-3 (30) | Polyester-2 (25) | Polyester-2 (8) | Polyester-3 (30) | Polyester-6 (30) | Polyester-3 (30) | Polyester-7 (50) | Polyester-3 (30) |
| | | Polyester-2 (45) | - | - | Polyester-5 (20) | Polyester-2 (20) | Polyester-4 (20) | - | Polyester-2 (20) |
| Diol (A) | | 1,2-ethanediol | 1,2-ethanediol | 1,2-ethanediol | 1,4-butanediol | 1,2-ethanediol | 1,2-ethanediol | 1,2-ethanediol | 1,2-ethanediol |
| Diol (B) | | 1,3-propanediol | 1,3-propanediol | 1,3-propanediol | 1,3-propanediol | 1,5-pentanediol | 1,3-propanediol | 1,3-propanediol | 1,3-propanediol |
| Mol Ratio (A)/(B) | | 67/33 | 73/27 | 59/41 | 63/38 | 63/38 | 63/38 | 75/25 | 63/38 |
| Intrinsic Viscosity of P1 Layer Polyester | | 0.74 | 0.68 | 0.65 | 0.85 | 0.77 | 0.65 | 0.67 | 0.7 |
| Filler content | mass% | 10 | 45 | 55 | 20 | 20 | 20 | 20 | 20 |
| Thermal Diffusivity in the Thickness Direction | $\times 10^{-7} m^2/s$ | 1.71 | 1.78 | 1.72 | 1.84 | 1.75 | 1.84 | 1.83 | 1.79 |
| Breakdown Voltage | kV/mm | 130 | 85 | 80 | 107 | 99 | 92 | 94 | 95 |
| Surface Specific Resistance | | A | A | A | A | A | A | A | A |
| Orientation | | A | A | A | A | A | A | A | A |
| Heat Radiation as Insulating Material | | B | B | B | A | B | A | A | B |
| Handling Ability as Insulating Material | | A | B | B | B | A | B | A | A |
| Heat Resistance as Insulating Material | | A | A | A | B | B | B | A | A |

[Table 1-3]

| | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|
| Raw Materials (parts by mass) | MB-1 (50) | MB-4 (33.3) | MB-8 (100) | MB-1 (12.5) | MB-1 (50) | MB-9 (50) | MB-1 (50) | MB-11 (50) |
| | Polyester-2 (50) | Polyester-3 (60) | - | Polyester-3 (30) | Polyester-5 (30) | Polyester-6 (30) | Polyester-2 (50) | Polyester-2 (50) |
| | - | Polyester-2 (6.7) | - | Polyester-2 (57.5) | Polyester-2 (20) | Polyester-3 (20) | - | - |
| Diol (A) | 1,2-ethanediol | 1,2-ethanediol | 1,2-ethanediol | 1,2-ethanediol | 1,2-ethanediol 1,4-butane diol | - | 1,2-ethanediol | 1,2-ethanediol |
| Diol (B) | - | 1,3-propanediol | 1,3-propanediol | 1,3-propanediol | - | 1,3-propanediol 1,5-pentanediol | - | - |
| Mol Ratio (A)/(B) | 100/0 | 25/75 | 50/50 | 68/32 | 100/0 | 0/100 | 100/0 | 100/0 |
| Intrinsic Viscosity of P1 Layer Polyester | 0.76 | 0.73 | 0.75 | 0.72 | 0.75 | 0.72 | 0.76 | 0.78 |
| Filler content mass% | 20 | 20 | 70 | 5 | 20 | 20 | 20 | 2 |

(continued)

| | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| Thermal Diffusivity in the Thickness Direction | $\times 10^{-7} m^2/s$ | 1.51 | 1 | Impossible to make film | 0.92 | 1.47 | 1.1 | 0.97 | 0.92 |
| Breakdown Voltage | kV/mm | 90 | 95 | | 150 | 95 | 95 | 90 | 20 |
| Surface Specific Resistance | | A | A | | A | A | A | A | C |
| Orientation | | A | A | | A | A | A | A | C |
| Heat Radiation as Insulating Material | | C | C | | C | C | C | C | C |
| Handling Ability as Insulating Material | | A | A | | A | A | A | A | A |
| Heat Resistance as Insulating Material | | A | C | | A | B | C | A | C |

[Table 2]

| | | | Example 17 | Example 18 | Example 19 | Example 20 | Example 21 | Example 22 |
|---|---|---|---|---|---|---|---|---|
| | Raw Materials (parts by mass) | P1 Layer | MB-10 (50) | MB-10 (50) | MB-10 (50) | MB-10 (50) | MB-10 (50) | MB-10 (50) |
| | | | Polyester-2 (50) | Polyester-2 (50) | Polyester-2 (50) | Polyester-2 (50) | Polyester-2 (50) | Polyester-2 (50) |
| | | P2 Layer | MB-10 (50) | Polyester-1 (100) | Polyester-1 (100) | Polyester-1 (100) | MB-1 (25) | Polyester-1 (100) |
| | | | Polyester-2 (50) | - | - | - | Polyester-1 (75) | - |
| | P1 Layer | Diol (A) | 1,2-ethanediol | 1,2-ethanediol | 1,2-ethanediol | 1,2-ethanediol | 1,2-ethanediol | 1,2-ethanediol |
| | | Diol (B) | 1,3-propanediol | 1,3-propanediol | 1,3-propanediol | 1,3-propanediol | 1,3-propanediol | 1,3-propanediol |
| | | Mol Ratio (A)/(B) | 75/25 | 75/25 | 75/25 | 75/25 | 75/25 | 75/25 |
| | Layer Structure (Lamination Ratio) | | P1 (-) | P2/P1/P2 (1/10/1) | P2/P1/P2 (1/40/1) | P2/P1/P2 (1/6/1) | P2/P1/P2 (1/10/1) | P2/P1 (1/10) |
| Film Properties | Thickness T | $\mu$m | 125 | 125 | 125 | 125 | 125 | 125 |
| | One Surface | Vfa/Vfb | - | 1.00 | 0.17 | 0.76 | 0.00 | 0.61 | 0.09 |
| | | Ma/MB | - | 1.00 | 0.17 | 0.76 | 0.00 | 0.17 | 0.09 |
| | Other Surface | Vfa/Vfb | - | 1.00 | 0.17 | 0.76 | 0.00 | 0.61 | 1.00 |
| | | Ma/MB | - | 1.00 | 0.17 | 0.76 | 0.00 | 0.17 | 1.00 |
| | Thermal Diffusivity in the Thickness Direction | $\times 10^{-7}$m$^2$/s | 2.18 | 2.10 | 2.13 | 1.93 | 2.15 | 2.12 |
| | Breakdown Voltage | kV/mm | 115 | 125 | 116 | 140 | 118 | 127 |
| | Mechanical properties | | B | S | A | S | S | B |
| | Orientation | | A | A | A | A | A | A |
| Heat Radiation as Insulating Material | | | S | S | S | A | S | S |
| Adhesion to Smooth Surface | | | B | S | A | S | A | B |

EP 3 578 594 A1

24

Industrial Applicability

The present invention can provide an oriented polyester film that is excellent in electrical insulating properties and thermal conductivity, compared to conventional oriented polyester films. Such an oriented polyester film can be suitably used in applications where electrical insulating properties and thermal conductivity are considered important, namely, applications including electrical insulating materials such as copper clad laminated boards, solar-cell back sheets, adhesive tape, flexible printed boards, membrane switches, planar heating elements, flat cables, insulation members for rotary electric machines, magnetic recording materials, capacitor materials, automobile materials, building materials, thermal ink-transfer printing materials, and electric cell materials. More specifically, such an oriented polyester film can be used to provide rotary electric machines, batteries, electronic equipment, and the like which have high energy efficiency.

Reference Signs List

1: Bobbin
2: Oriented Polyester Film
3: Copper Wire
4: Copper Wire Side Thermistor
5: Bobbin Side Thermistor
a: Collar Diameter
b: Body Diameter
c: Full Length
d: Internal Width
e: Winding Clearance
f: Thickness (T) of Oriented Polyester Film
g: One Surface
h: Region from One Surface to Thickness Position 0.1T
i: Region from Thickness Position 0.1T to Thickness Position 0.9T relative to One Surface

**Claims**

1. An oriented polyester film, comprising a layer (P1 layer) containing a polyester and a filler, wherein said P1 layer satisfies the following (1) and (2):

    (1) the filler content of said P1 layer is 10 to 60 mass% with respect to the whole P1 layer; and
    (2) said polyester contained in said P1 layer contains, as a main component, a polyester having an aromatic dicarboxylic acid component and a diol component as main constituents;

    wherein said diol component contains a diol (A) whose main-chain has an even number of carbon atoms and a diol (B) whose main-chain has an odd number of carbon atoms; and
    wherein a molar ratio (A)/(B) of said diol (A) to said diol (B) is 30/70 to 97/3.

2. The oriented polyester film according to claim 1, wherein said diol (B) whose main-chain has an odd number of carbon atoms is 1,3-propanediol.

3. The oriented polyester film according to claim 1 or 2, wherein said diol (A) whose main-chain has an even number of carbon atoms is 1,2-ethanediol.

4. The oriented polyester film according to any one of claims 1 to 3, having a thermal diffusivity in the thickness direction is $1.6 \times 10^{-7}$ m$^2$/s or more.

5. The oriented polyester film according to any one of claims 1 to 4, wherein said polyester of said P1 layer has an intrinsic viscosity (IV) of 0.65 or more.

6. The oriented polyester film according to any one of claims 1 to 5, having a breakdown voltage of 60 kV/mm or more.

7. The oriented polyester film according to any one of claims 1 to 6, having a surface specific resistance of $1.0 \times 10^{13}$ $\Omega/\square$ or more.

8. The oriented polyester film according to any one of claims 1 to 7, wherein at least one surface of the film satisfies $0 \leq Vfa / Vfb < 1$,
wherein, assuming that the thickness of said film is T ($\mu$m),
Vfa (vol%) is the filler content in a region from the one surface of said film to the thickness position 0.1T, and
Vfb (vol%) is the filler content in a region from said thickness position 0.1T to the thickness position 0.9T relative to the one surface of said film.

9. The oriented polyester film according to claim 8, wherein both surfaces satisfy $0 \leq Vfa/ Vfb < 1$.

10. The oriented polyester film according to any one of claims 1 to 9, wherein at least one surface of the film satisfies $0 \leq Ma / Mb < 1$,
wherein, assuming that the thickness of said film is T ($\mu$m),
Ma (mol%) is a ratio of said diol (B) whose main-chain has an odd number of carbon atoms to the diol components contained in said polyester in said region from one surface of said film to said thickness position 0.1T, and
Mb (mol%) is a ratio of said diol (B) whose main-chain has an odd number of carbon atoms to the diol components contained in said polyester in said region from said thickness position 0.1T to said thickness position 0.9T relative to said one surface of said film.

11. The oriented polyester film according to claim 10, wherein both surfaces satisfy $0 \leq Ma / Mb < 1$.

[Fig. 1]

[Fig. 2]

## INTERNATIONAL SEARCH REPORT

| International application No. |
|---|
| PCT/JP2017/033850 |

**A. CLASSIFICATION OF SUBJECT MATTER**
Int.Cl. C08J5/18(2006.01)i, B32B27/36(2006.01)i, C08K3/00(2006.01)i,
C08L67/02(2006.01)i

According to International Patent Classification (IPC) or to both national classification and IPC

**B. FIELDS SEARCHED**

Minimum documentation searched (classification system followed by classification symbols)
Int.Cl. C08J5/00-5/02, C08J5/12-5/22, B32B1/00-43/00, B29C55/00-55/30,
B29C61/00-61/10, C08K3/00-13/08, C08L1/00-101/14

Documentation searched other than minimum documentation to the extent that such documents are included in the fields searched
Published examined utility model applications of Japan       1922–1996
Published unexamined utility model applications of Japan     1971–2017
Registered utility model specifications of Japan             1996–2017
Published registered utility model applications of Japan     1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2000-355090 A (TORAY INDUSTRIES) 26 December 2000,<br>claims, paragraphs [0022], [0024], [0028], [0049],<br>[0053], example 8<br>(Family: none) | 1-8, 10<br>9, 11 |
| X<br>A | JP 2009-138067 A (TORAY INDUSTRIES) 25 June 2009,<br>claims, paragraphs [0095], [0114]-[0117], [0124],<br>[0125], [0134], [0135], examples 10, 11, comparative<br>example 3<br>(Family: none) | 1-3, 5<br>4, 6-11 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11.12.2017 | 19.12.2017 |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

EP 3 578 594 A1

**INTERNATIONAL SEARCH REPORT**

| | International application No. |
|---|---|
| | PCT/JP2017/033850 |

C (Continuation).   DOCUMENTS CONSIDERED TO BE RELEVANT

| Category* | Citation of document, with indication, where appropriate, of the relevant passages | Relevant to claim No. |
|---|---|---|
| X<br>A | WO 2016/167149 A1 (MITSUBISHI PLASTICS IND.) 20 October 2016, claims, paragraphs [0016]–[0018], [0117]–[0119] & TW 201643476 A | 1, 3, 4, 6–11<br>2, 5 |
| X<br>A | JP 2014-031011 A (TOYOBO CO., LTD.) 20 February 2014, claims, paragraphs [0097]–[0103] & US 2011/0008607 A1, claims, paragraphs [0283]–[0289] & WO 2009/107591 A1 & EP 2258538 A1 & KR 10-2010-0137464 A & CN 101970212 A & ES 2443946 T | 1, 3-9<br>2, 10, 11 |
| X<br>A | JP 2013-522413 A (KOLON INDUSTRIES, INC.) 13 June 2013, claims, paragraphs [0080]–[0088], [0096] & US 2013/0012640 A1, claims, paragraphs [0091]–[0099], table 1 & WO 2011/122880 A2 & EP 2554577 A2 & KR 10-2011-0109741 A & CN 102834438 A | 1, 3-7<br>2, 8-11 |
| Y<br>A | JP 2007-016056 A (TEIJIN DUPONT FILMS JAPAN LTD.) 25 January 2007, claims, paragraphs [0012], [0013] & US 2004/0151900 A1, claims, paragraphs [0016], [0017] & WO 2003/082962 A1 & EP 1489131 A1 & CN 1522272 A & KR 10-2004-0093376 A & AU 2003211447 A & TW 200304460 A | 9, 11<br>1-8, 10 |
| Y<br>A | JP 2011-126272 A (TOYOBO CO., LTD.) 30 June 2011, claims, paragraphs [0021], [0022], [0050] & WO 2011/062081 A1 & TW 201129474 A | 9, 11<br>1-8, 10 |
| Y<br>A | JP 2007-178788 A (TOYOBO CO., LTD.) 12 July 2007, paragraphs [0010], [0013] & WO 2007/074853 A1 & TW 200730887 A | 9, 11<br>1-8, 10 |

Form PCT/ISA/210 (continuation of second sheet) (January 2015)

29

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008080672 A
- JP 2013028753 A
- JP 2013038179 A